# EUROPEAN PATENT APPLICATION

(11) **EP 3 667 516 A1**
(43) Date of publication of application: **17.06.2020**
(21) Application number: 17923633.6
(22) Date of filing: 31.08.2017
(51) Int. Cl.: G06F 16/332

(54) **METHOD FOR RECOMMENDING SEARCH WORD, AND RELATED DEVICE**

(71) Applicant: SHENZHEN HEYTAP TECHNOLOGY CORP., LTD., Shenzhen, Guangdong 518057 (CN)
(72) Inventor: LUO, Yue, Shenzhen Guangdong 518057 (CN)
(74) Representative: Manitz Finsterwald Patent- und Rechtsanwaltspartnerschaft mbB
(86) International application number: PCT/CN2017/100077
(87) International publication number: WO 2019/041277

(57) **Abstract**

A method for recommending a search word, and a related device. The method comprises: obtaining N search words, N being a positive integer (101); determining application types corresponding to the N search words, each application type being corresponding to one recommendation box (102); and displaying a search word i in a recommendation box corresponding to an application type corresponding to the search word i, the search word i being one of the N search words (103). Performance of a recommendation function can be improved.

## Description

### FIELD

The present disclosure relates to a field of electronic technologies, and more particularly, to a method for recommending a search word, and a related device.

### BACKGROUND

With the increasing amount of information, if a user wants to search for information (such as a piece of news, an application (APP), a picture, and the like) that he/she needs from lots of information, normally the user inputs search words related to his/her search intention in a search box provided by a certain webpage or an App with a terminal device (such as a smartphone, a tablet computer, and the like), so that a server searches according to the search words and then returns search results to the terminal device. And then, the terminal device displays the search results.

### SUMMARY

Embodiments of the present disclosure provide a method for recommending a search word, and a related device, which may improve performance of a recommendation function.

An embodiment according to a first aspect of the present disclosure provides a method for recommending a search word, including: obtaining N search words, N being a positive integer; determining application types corresponding respectively to the N search words, each application type corresponding to one recommendation box; and displaying a search word i in a recommendation box corresponding to the application type corresponding to the search word i, the search word i being one of the N search words.

An embodiment according to a second aspect of the present disclosure provides a terminal device. The terminal device includes: an obtaining unit, a determining unit and a displaying unit. The obtaining unit is configured to obtain N search words, N being a positive integer. The determining unit is configured to determine application types corresponding respectively to the N search words, each application type corresponding to one recommendation box. The displaying unit is configured to display a search word i in a recommendation box corresponding to the application type corresponding to the search word i, the search word i being one of the N search words.

An embodiment according to a third aspect of the present disclosure provides a terminal device. The terminal device includes: one or more processors, one or more memories, one or more transceivers, and one or more programs. The one or more programs are stored in the one or more memories and are configured to be executed by the one or more processors. The one or more programs include instructions for performing steps in the method as described in the first aspect.

An embodiment according to a fourth aspect of the present disclosure provides a computer readable storage medium. The computer readable storage medium stores a computer program for electronic data exchange. The computer program causes a computer to execute the method as described in the first aspect.

An embodiment according to a fifth aspect of the present disclosure provides a computer program product. The computer program product includes a non-transitory computer readable storage medium storing a computer program. The computer program is operable to cause a computer to execute the method as described in the first aspect.

At present, normally a web page or an APP only provides one search box for a user to input search words. In this application, a recommendation box is provided for each application type, and a recommendation box corresponding to an application type displays a search word related to the application type, so as to recommend the search word for the user, thereby improving the performance of the recommendation function.

These or other aspects of the present disclosure will become apparent and more readily appreciated from the description of the following embodiments.

### BRIEF DESCRIPTION OF THE DRAWINGS

In order to clearly illustrate technical solutions of embodiments of the present disclosure or in the prior art, a brief description of drawings used in the embodiments or the prior art is given below. Obviously, the drawings in the following descriptions are only part embodiments of the present disclosure, and for those skilled in the art, other drawings can be obtained according to these drawings without creative labor.
FIG. 1 is a schematic flowchart of a method for recommending a search word according to an embodiment of the present disclosure.
FIG. 2 is a schematic diagram of an interface according to an embodiment of the present disclosure.
FIG. 3 is a schematic diagram of an interface according to another embodiment of the present disclosure.
FIG. 4 is a schematic diagram of an interface according to yet another embodiment of the present disclosure.
FIG. 5 is a schematic flowchart of a method for recommending a search word according to another embodiment of the present disclosure.
FIG. 6 is a schematic block diagram of a terminal device according to an embodiment of the present disclosure.
FIG. 7 is a schematic block diagram of a terminal device according to another embodiment of the present disclosure.
FIG. 8 is a schematic block diagram of a terminal device according to yet another embodiment of the present disclosure.

### DETAILED DESCRIPTION

In order to enable those skilled in the art to understand the solutions of the present disclosure, technical solutions in the embodiments of the present disclosure will be clearly and completely described with reference to accompanying drawings. Obviously, the embodiments described here are only part of the embodiments of the present disclosure and are not all embodiments of the present disclosure. Based on the embodiments of the present disclosure, other embodiments obtained by those skilled in the art without creative labor would fall within the scope of the present disclosure.

Detailed description is given below.

Terms "first", "second", "third", "fourth" and the like in the description, claims and accompanying drawings of the present disclosure are used for distinguishing between different objects, rather than describing a particular order. Furthermore, terms "include", "have" as well as any variation thereof, are intended to cover non-exclusive inclusions. For example, a process, a method, a system, a product, or an apparatus that includes a series of steps or units is not limited to steps or units listed, but may alternatively include steps or units not listed, or may alternatively include steps or units inherent to the process, the method, the product, or the apparatus.

Reference herein to "an embodiment" means that a particular feature, structure or characteristic described in combination with the embodiment may be included in at least one embodiment of the present disclosure. The phrase appearing in different places of the specification neither necessarily refers to the same embodiment, nor refers to separate or alternative embodiments mutually exclusive of other embodiments. It is explicitly and implicitly understood by those skilled in the art that the embodiments described herein may be combined with other embodiments.

A terminal device is a device that provides voice and/or data connectivity to a user, such as a handheld device and a vehicle-mounted device with a wireless connection function. Common terminal devices include: mobile phones, tablet computers, laptops, PDAs, mobile internet devices (MIDs), and wearable devices, such as smart watches, smart bracelets, pedometers, and the like.

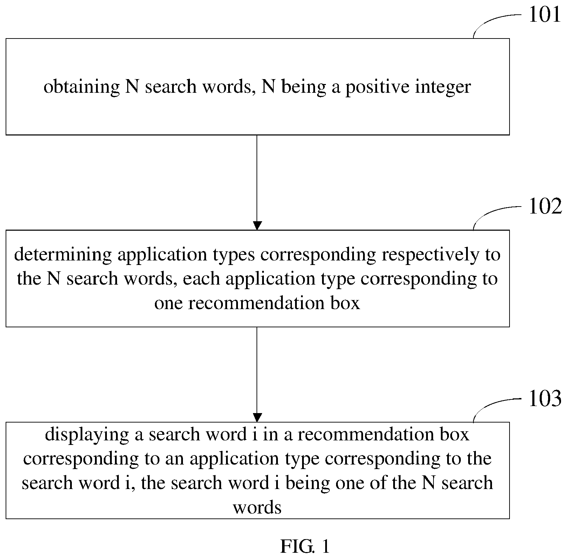

FIG. 1 is a schematic flowchart of a method for recommending a search word according to an embodiment of the present disclosure. As illustrated in FIG. 1, the method includes the followings.

At block 101, a terminal device obtains N search words, N being a positive integer.

The search word refers to a word that a user actually uses for searching. For example, when the user wants to search for a game application in an application store, the user may input a search word such as "game" or "Glory of Kings" in a search box after entering the application store to find an application related to "game". The words entered in the search box can be configured as the search word.

In an example, a specific implementation manner for the terminal device to obtain the N search words includes: the terminal device obtaining K search words searched by M users currently, M being a positive integer and K being greater than or equal to M; and the terminal device selecting the N search words from the K search words, K being greater than N.

Further, a specific implementation manner for the terminal device to obtain the K search words searched by the M users currently includes: the terminal device sending a search word obtaining request to a server, the search word obtaining request being configured to acquire the K search words currently searched by the M users; the server acquiring the K search words searched by the M users currently according to the search word obtaining request; and the server sending the obtained K search words currently searched by the M users to the terminal device.

Further, the K search words correspond to K search times, and a specific implementation manner for the terminal device to select the N search words from the K search words includes: the terminal device selecting the N search words each with a number of search times greater than or equal to a preset threshold from the K search words. Alternatively, a specific implementation manner for the terminal device to select the N search words from the K search words includes: the terminal device randomly selecting the N search words from the K search words.

For example, assume that the method for recommending the search word described above is applied to XXX software store, M=5, K=7, and N=3. After a user searches in the XXX software store with a terminal device, the terminal device sends the search word obtaining request to a server of the XXX software store, and the server of the XXX software store receives the search word obtaining request. If a plurality of users are searching in the XXX software store, the server of the XXX software store randomly selects 5 users from the plurality of users and obtains 7 search words currently searched by the 5 users. The server sends the 7 search words to the terminal device. The terminal device selects 3 search words each with the number of search times greater than or equal to the preset threshold from the 7 search words. The preset threshold may be, for example, 100, 200, 300, 400, 500 or other value. Alternatively, the terminal device randomly selects 3 search words from the 7 search words.

In an example, a specific implementation manner for the terminal device to obtain the N search words includes: the terminal device obtaining Z search words of users within a target time period; and the terminal device selecting, from the Z search words, the N search words each being searched by the users is greater more than or equal to a target number of times (i.e., each having the number of search times greater than or equal to the target number of times) and being lately searched at a time point having a time difference from a current system time less than a target time duration. Z is greater than N, and a termination time point of the target time period is the current system time.

At block 102, the terminal device determines application types corresponding respectively to the N search words, each application type corresponding to a recommendation box.

The application type may be, for example: a game application type, an instant messaging application type, a shopping application type, a payment application type, a reading application type, a fitness application type, a health application type, a travel application type, an audio playing application type, a video playing application type, a social application type, and the like.

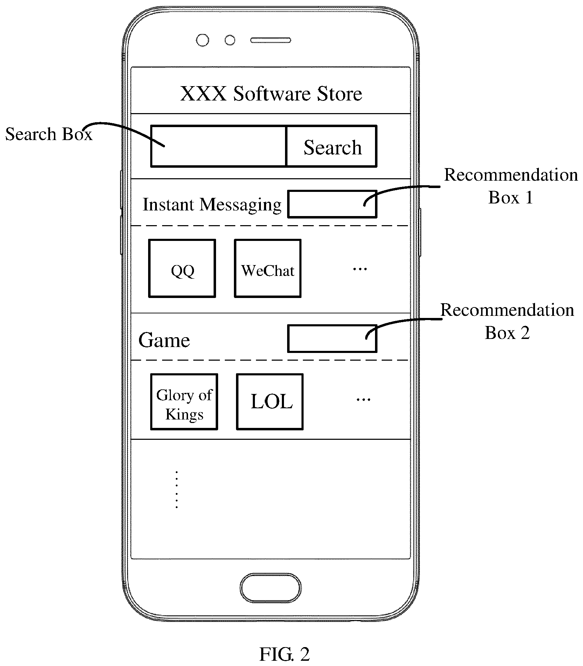

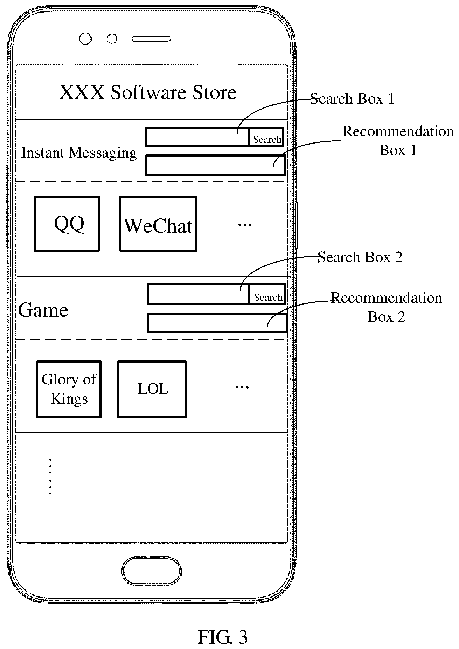

The recommendation box is different from the search box. Assume that the method for recommending the search word is applied to the XXX software store. There may be a search box and a plurality of recommendation boxes on a homepage of the XXX software store, as illustrated in FIG. 2, each recommendation box corresponds to one application type. There may also be a plurality of search boxes and a plurality of recommendation boxes on the homepage of the XXX software store, as illustrated in FIG. 3, each application type corresponds to one search box and one recommendation box, the recommendation box corresponding to application type j is near the search box corresponding to application type j, the application type j being any application type. In FIG. 2 and FIG. 3, in a recommendation box of an application type, only search words related to the corresponding application type are recommended. For example, in the recommendation box corresponding to the game application type, only search words related to games are recommended; in the recommendation box corresponding to the instant messaging application type, only search words related to the instant messaging are recommended, and the like. The search box and the recommendation box are located on the homepage of the XXX software store.

In an example, a specific implementation manner for the terminal device to determine the application types corresponding respectively to the N search words includes: the terminal device determining the application types corresponding respectively to the N search words based on a mapping relationship between search words and application types.

In detail, the mapping relationship between search words and application types is shown in table 1. Take N being 3, the 3 search words being: QQ, Glory of Kings and WeChat as an example. From table 1, it may be known that the application type corresponding to the search words "Knowledge search" and "WeChat" is the instant messaging application type, and the application type corresponding to the search word "Glory of Kings" is the game application type.

**Table 1**

| Search Word | Application Type |
|---|---|
| Glory of Kings | game application type |
| LOL | |
| ⋮ | |
| QQ | instant messaging application type |
| WeChat | |
| ⋮ | |
| ⋮ | ⋮ |

At block 103, the terminal device displays a search word i in a recommendation box corresponding to the application type corresponding to the search word i, the search word i being one of the N search words.

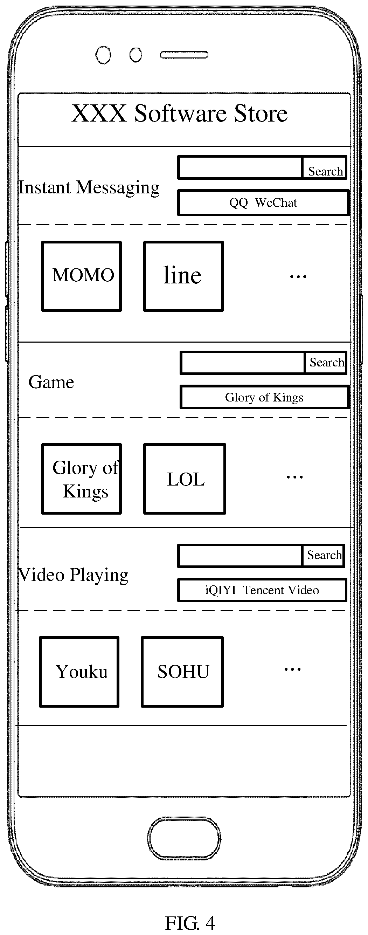

Take N being 5, and the 5 search words being QQ, Glory of Kings, WeChat, Tencent video, and iQIYI as an example. It may be known from table 1 that the application type corresponding to the search words "QQ" and "WeChat" is the instant messaging application type, and the application type corresponding to the search word "Glory of Kings" is the game application type. The application type corresponding to the search words "Tencent video" and "iQIYI" is the video playing application type. Assuming that the method for recommending the search word is applied to the XXX software store, as shown in FIG. 4, the terminal device displays "QQ" and "WeChat" in a recommendation box corresponding to the instant messaging application type, "Glory of Kings" in a recommendation box corresponding to the game application type, and "Tencent video" and "iQIYI" in a recommendation box corresponding to the video playing application type. It should be noted that, due to a limited size of a screen of the terminal device, the terminal device only displays related content of the instant messaging application type and the game application type at present, and the user may view related content of other application types when scrolling down the screen of the terminal device.

In the related art, normally a web page or an APP only provides one search box for the user to input search words. In the present application, a recommendation box is provided for each application type, and the recommendation box corresponding to an application type displays a search word related to the application type, so as to recommend the search word for the user, thereby improving the performance of the recommendation function.

In an example, after the terminal device displays the search word i in the recommendation box corresponding to the application type corresponding to the search word i, the method further includes: when a time period during which the search word I is displayed in the recommendation box is longer than a preset time duration, the terminal device updating the search word displayed in the recommendation box corresponding to the application type corresponding to the search word i.

In an example, the method further includes: when a click operation directed against the search word i is detected within the preset time duration, the terminal device updating the search word displayed in the recommendation box corresponding to the application type corresponding to the search word i.

The preset time duration may be 3s, 4s, 6s, 7s, 10s, or other value.

In an example, assume that the application type of the search word i is an application type k, the N search words include R search words with the application type k, and that at block 103, T search words are displayed in the recommendation box corresponding to the application type k, T being less than R/2. A specific implementation manner for the terminal device to update the search word displayed in the recommendation box corresponding to the application type corresponding to the search word i includes: the terminal device re-selecting T search words from the R search words, and displaying the re-selected T search words in the recommendation box corresponding to the application type k. The re-selected T search words are different from the T search words displayed in the recommendation box corresponding to the application type k as specified at block 103.

As an example, the preset time duration is 3s, the search word i is WeChat. The application type k corresponding to the search word "WeChat" is the instant messaging application type. Assume that N=40, R=6, T=2, and there are 6 search words, which are WeChat, QQ, DingTalk, MOMO, WhatsApp and line, each having the instant messaging application type. Suppose that the two search words displayed in the recommendation box corresponding to the instant messaging application type at block 103 are "WeChat" and "QQ". If the search word "WeChat" is displayed in the recommendation box corresponding to the instant messaging application type for longer than 3 seconds, or a click operation on the search word "WeChat" is detected within the 3 seconds during which the search word "WeChat" is displayed, the terminal device selects another 2 search words, for example, "DingTalk" and "MOMO", from the 6 search words of the instant messaging application type, and replaces the search words "WeChat" and "QQ" displayed in the recommendation box corresponding to the instant messaging application type with the search words "DingTalk" and "MOMO".

In an example, if the application type of the search word i is the application type k, and the number of search words displayed in the recommendation box corresponding to the application type k is T, where T is a positive integer, a specific implementation manner for the terminal device to update the search word displayed in the recommendation box corresponding to the application type corresponding to the search word i includes: the terminal device obtaining B search words currently searched by W users, where W is a positive integer, B is greater than T, and the W users are different from the N users; the terminal device re-selecting T search words each with the application type k from the B search words; and the terminal device replacing the T search words displayed in the recommendation box corresponding to the application type k at block 103 with the re-selected T search words. The re-selected T search words are different from the T search words displayed at block 103.

As an example, the preset time duration is 3s, the search word i is WeChat. The application type k corresponding to the search word "WeChat" is the instant messaging application type. Assume that T=2, W=10, B=20. Suppose that the two search words displayed in the recommendation box corresponding to the instant messaging application type at block 103 are "WeChat" and "QQ". If the search word "WeChat" is displayed in the recommendation box corresponding to the instant messaging application type for longer than 3 seconds, or a click operation on the search word "WeChat" is detected within the 3 seconds during which the search word "WeChat" is displayed, the terminal device obtains 20 search words currently searched by 10 users again, re-selects, from the 20 search words, 2 search words, for example, "DingTalk" and "MOMO", each with the instant messaging application type, and replaces the search words "WeChat" and "QQ" displayed in the recommendation box corresponding to the instant messaging application type with the search words "DingTalk" and "MOMO".

In an example, after displaying the search word i in the recommendation box corresponding to the application type corresponding to the search word i, the method further includes: the terminal device highlighting the recommendation box; or the terminal device highlighting at least one search word displayed in the recommendation box.

Furthermore, the terminal device highlighting the recommendation box includes at least one of the followings: (1) the terminal device displaying an indication mark next to the recommendation box, the indication mark including an arrow and a pointing gesture, and the indication mark pointing to the recommendation box; (2) the terminal device rendering a border of the recommendation box in boldface, or the terminal device displaying the border of the recommendation box in a color different from a color of a border of a search box; and (3) the terminal device displays displaying an animation on the recommendation box, different recommendation boxes having a same animation or different animations displayed thereon.

Furthermore, different recommendation boxes may be highlighted in the same way or in different ways, which are not limited herein.

It can be seen that the terminal device highlighting the recommendation box makes it easier for the user to notice the recommendation box, thereby making it easier for the user to notice the search words displayed in the recommendation box, and further improving the performance of the recommendation function.

Furthermore, the terminal device to highlighting at least one search word displayed in the recommendation box includes at least one of the followings: (1) the terminal device rendering the at least one search word displayed in the recommendation box in boldface; (2) the terminal device displaying the at least one search word displayed in the recommendation box in a font different from fonts of words outside the recommendation box; and (3) the terminal device displaying the at least one search word displayed in the recommendation box in a color different colors of words outside the recommendation box.

Furthermore, the search words displayed in different recommendation boxes may be highlighted in the same way or in different ways, which are not limited herein.

It can be seen that the terminal device highlighting the at least one search word in the recommendation box may make it easier for the user to notice the at least one search word displayed in the recommendation box, thereby further improving the performance of the recommendation function.

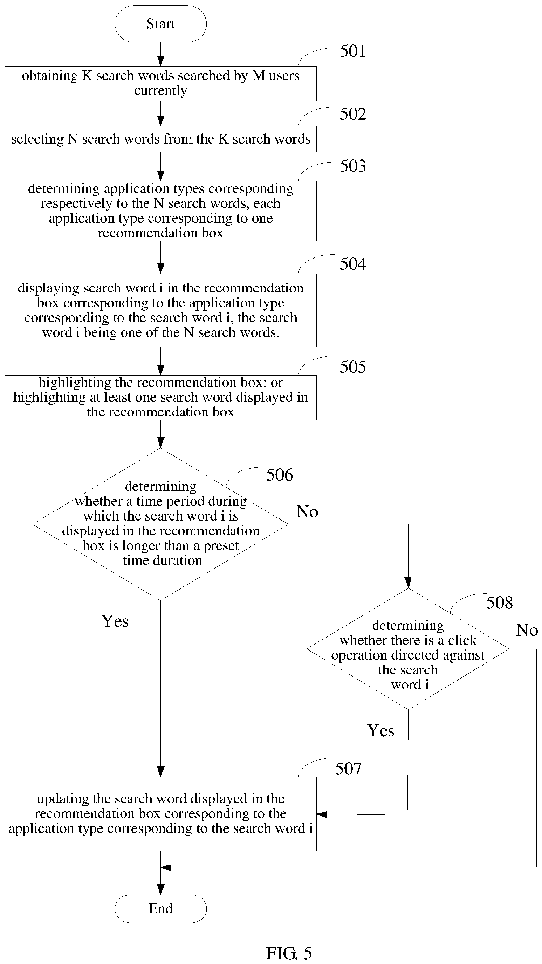

An embodiment of the present disclosure further provides another more detailed method flow, as illustrated in FIG. 5. The method includes the followings.

At block 501, the terminal device obtains K search words searched by M users currently, M being a positive integer.

At block 502, the terminal device selects N search words from the K search words, N being a positive integer, and K being greater than N.

At block 503, the terminal device determines application types corresponding respectively to the N search words, each application type corresponding to a recommendation box.

At block 504, the terminal device displays a search word i in the recommendation box corresponding to the application type corresponding to the search word i, the search word i being one of the N search words.

At block 505, the terminal device highlights the recommendation box; or the terminal device highlights at least one search word displayed in the recommendation box.

At block 506, the terminal device determines whether a time period during which the search word i is displayed in the recommendation box is longer than a preset time duration.

If yes, the act at block 507 is executed.

If no, the act at block 508 is executed.

At block 507, the terminal device updates the search word displayed in the recommendation box corresponding to the application type corresponding to the search word i.

At block 508, the terminal device determines whether there is a click operation directed against the search word i.

If yes, the act at block 507 is executed.

If no, no operation is executed.

It should be noted that, a specific implementation of the blocks of the method illustrated in FIG. 5 may refer to the specific implementation of the above described method, which will not be described here.

The method according to the embodiments of the present disclosure is set forth above in detail and the device according to the embodiments of the present disclosure is provided below.

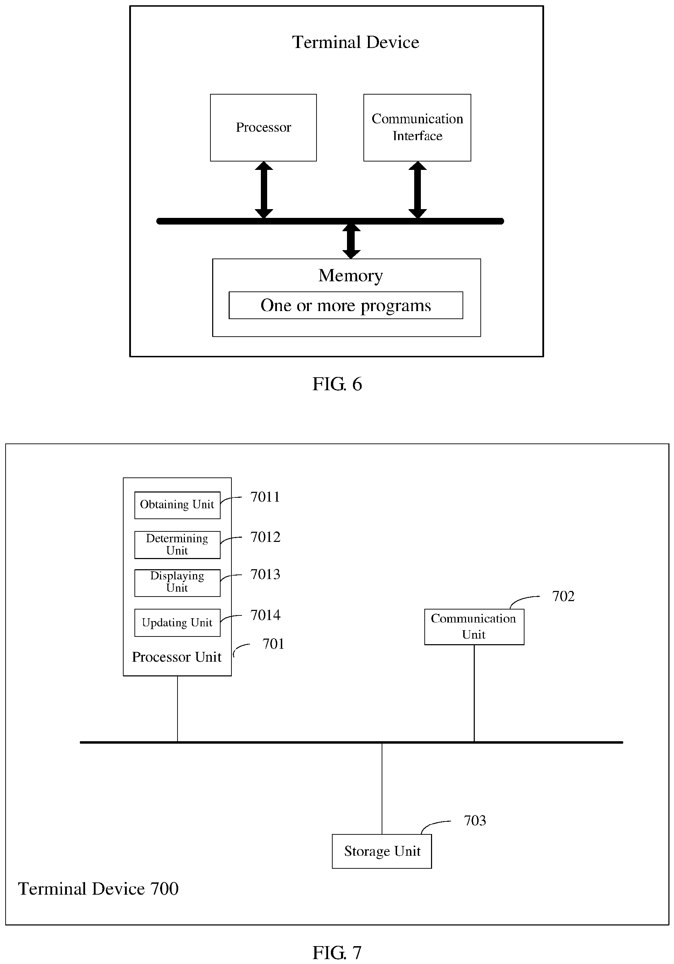

Referring to FIG. 6, FIG. 6 illustrates a terminal device 600 according to an embodiment of the present disclosure. The terminal device 600 includes: at least one processor, at least one memory, at least one communication interface, and one or more programs.

The one or more programs are stored in the memory and configured to be executed by the processor. The programs include instructions for performing the followings: obtaining N search words, N being a positive integer; determining application types corresponding respectively to the N search words, each application type corresponding to a recommendation box; and displaying a search word i in a recommendation box corresponding to the application type corresponding to the search word i, the search word i being one of the N search words.

In an example, after displaying the search word i in the recommendation box corresponding to the application type corresponding to the search word i, the programs include instructions further configured to perform the followings: when a time period during which the search word i is displayed in the recommendation box is longer than a preset time duration, updating the search word displayed in the recommendation box corresponding to the application type corresponding to the search word i.

In an example, the programs include instructions further configured to perform the followings: when a click operation directed against the search word i is detected within the preset time duration, updating the search word displayed in the recommendation box corresponding to the application type corresponding to the search word i.

In an example, in terms of obtaining the N search words, the programs include instructions configured to perform the followings: obtaining K search words searched by M users currently, M being a positive integer, K being greater than N; and selecting the N search words from the K search words.

In an example, in terms of obtaining the N search words, the programs include instructions configured to perform the followings: obtaining Z search words of users within a target time period; and selecting, from the Z search words, the N search words each being searched by the users more than or equal to the a target number of times and being lately searched at a time point having a time difference from a current system time less than a target time duration, Z being greater than N, and a termination time point of the target time period being the current system time.

In an example, after displaying the search word i in the recommendation box corresponding to the application type corresponding to the search word i, the programs include instructions further configured to perform the followings: highlighting the recommendation box; or highlighting at least one search word displayed in the recommendation box.

In an example, highlighting the recommendation box includes at least one of: displaying an indication mark next to the recommendation box, the indication mark pointing to the recommendation box; rendering a border of the recommendation box in boldface, or displaying the border of the recommendation box in a color different from a color of a border of the search box; and displaying an animation on the recommendation box.

In an example, highlighting at least one search word displayed in the recommendation box includes at least one of: rendering the at least one search word displayed in the recommendation box in boldface; displaying the at least one search word displayed in the recommendation box in a font different from fonts of words outside the recommendation box; and displaying the at least one search word displayed in the recommendation box in a color different colors of words outside the recommendation box.

In an example, in terms of determining the application types corresponding respectively to the N search words, the programs include instructions configured to perform the followings: determining the application types corresponding respectively to the N search words based on a mapping relationship between search words and application types.

It should be noted that, a specific implementation manner of the content described in this embodiment may refer to the above method, which will not be described here.

The solutions of the embodiments according to the present disclosure are mainly introduced from the perspective of method-side execution processes in the above. It may be understood that, in order to implement the foregoing functions, the terminal device includes corresponding hardware structure and/or a software module for performing each function. It is conceivable for those skilled in the art that, with reference to the units and algorithm steps of each example described in the embodiments disclosed herein, this application may be implemented in hardware or a combination of hardware and computer software. Whether a certain function is performed by hardware or hardware driven by the computer software depends on particular application and design constraints of the technical solutions. Professionals may adopt different methods to implement described functions for each particular application, but it should not be considered that the implementation goes beyond the scope of the present disclosure.

The embodiments of the present disclosure may divide the functional units of the terminal device according to the foregoing method examples. For example, each functional unit may be divided for performing a function, or two or more functions may be integrated into one processing unit. The above integrated unit may be implemented in hardware or in software. It should be noted that the division of the units in the embodiments of the present disclosure is merely exemplary, for example, based on logical functions. In actual implementation, the units may be divided in other manners.

In the case where integrated units are adopted, FIG. 7 shows a block diagram of a possible functional unit composition of the terminal device involved in the foregoing embodiments. The terminal device 700 includes a processing unit 701, a communication unit 702 and a storage unit 703. The processing unit 701 includes an obtaining unit 7011, a determining unit 7012, a displaying unit 7013 and an updating unit 7014. The storage unit 703 is configured to store program codes and data of the terminal device. The communication unit 702 is configured to support communications between the terminal device and other devices. Some of the above units (the obtaining unit 7011, the determining unit 7012, the displaying unit 7013 and the updating unit 7014) are configured to execute relevant steps of the above method.

The obtaining unit 7011 is configured to obtain N search words, N being a positive integer.

The determining unit 7012 is configured to determine application types corresponding respectively to the N search words, each application type corresponding to a recommendation box.

The displaying unit 7013 is configured to display a search word i in a recommendation box corresponding to the application type corresponding to the search word i, the search word i being one of the N search words.

In an example, after the displaying unit 7013 displays the search word i in the recommendation box corresponding to the application type corresponding to the search word i, the terminal device further includes the updating unit 7014.

The updating unit 7014 is configured to, when a time period during which the search word i is displayed in the recommendation box is longer than a preset time duration, update the search word displayed in the recommendation box corresponding to the application type corresponding to the search word i.

In an example, the updating unit 7014 is further configured to, when a click operation directed against the search word i is detected within the preset time duration, update the search word displayed in the recommendation box corresponding to the application type corresponding to the search word i.

In an example, the obtaining unit 7011 is configured to: obtain K search words searched by M users currently, M being a positive integer and K being greater than N; and select the N search words from the K search words.

In an example, the obtaining unit 7011 is configured to: obtain Z search words of users in a target time period; and to select, from the Z search words, the N search words each being searched by the users more than or equal to a target number of times and being lately searched at a time point having a time difference from a current system time less than a target time duration, Z being greater than N, and a termination time point of the target time period being the current system time.

In an example, after the displaying unit 7013 displays the search word i in the recommendation box corresponding to the application type corresponding to the search word i, the displaying unit 7013 is further configured to highlight the recommendation box; or to highlight at least one search word displayed in the recommendation box.

In an example, highlighting the recommendation box includes at least one of: displaying an indication mark next to the recommendation box, the indication mark pointing to the recommendation box; rendering a border of the recommendation box in boldface, or displaying the recommendation box in a color different from a color of a border of a search box; and displaying an animation on the recommendation box.

In an example, highlighting at least one search word displayed in the recommendation box includes at least one of: rendering the at least one search word displayed in the recommendation box in boldface; displaying the at least one search word displayed in the recommendation box in a font different from fonts of words outside the recommendation box; and displaying the at least one search word displayed in the recommendation box in a color different colors of words outside the recommendation box.

In an example, the determining unit 7012 is configured to: determine the application types corresponding respectively to the N search words based on a mapping relationship between search words and application types.

The processing unit 701 may be a processor or a controller (for example, a central processing unit (CPU), a general-purpose processor, a digital signal processor (DSP), an application-specific integrated circuit (ASIC), a field programmable gate array (FPGA), or other programmable logic device, a transistor logic device, a hardware component, or any combination thereof. The processing unit may implement or execute various exemplary logical blocks, modules and circuits described in combination with the disclosure of this application. The processor may also be a combination that implements computing functions, such as a combination of one or more microprocessors, a combination of a DSP and a microprocessor, and the like). The storage unit 703 may be a memory. The communication unit 702 may be a transceiver, a transceiver circuit, a radio frequency chip, a communication interface, and so on.

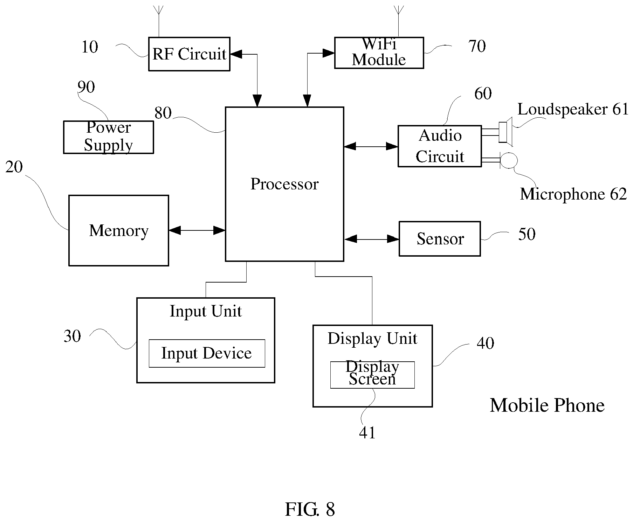

An embodiment of the present disclosure further provides a terminal device. As illustrated in FIG. 8, for convenience of explanation, only the parts related to the embodiment of the present disclosure are shown. For specific technical details that have not been disclosed, reference may be made to the context of the method according to the embodiments of the present disclosure. As an example, the terminal device is a mobile phone.

FIG. 8 is a schematic diagram of an internal structure of a mobile phone related to the terminal device according to an embodiment of the present disclosure. With reference to FIG. 8, the mobile phone includes a radio frequency (RF) circuit 10, a memory 20, an input unit 30, a display unit 40, a sensor 50, an audio circuit 60, a wireless fidelity (Wi-Fi) module 70, a processor 80 and a power supply 90, and the like. It may be understood by those skilled in the art that, the structures of the mobile phone illustrated in FIG. 8 do not limit the structures of the mobile phone. The mobile phone may include less or more components than those illustrated in FIG. 8 or combinations thereof, or have a different arrangement of components.

The following describes each component in the mobile phone in detail with reference to FIG. 8.

The RF circuit 10 may be configured to transmit and receive a message. In general, the RF circuit 10 includes but is not limited to an antenna, at least one amplifier, a transceiver, a coupler, a low noise amplifier (LNA), a diplexer and the like. Furthermore, the RF circuit 10 may be further configured to communicate with other devices via wireless communication and network. The above wireless communication may adopt any communication standard or protocol, which includes but is not limited to global system of mobile communication (GSM), general packet radio service (GPRS), code division multiple access (CDMA), wideband code division multiple access (WCDMA), long term evolution (LTE), e-mail, short messaging service (SMS) and the like.

The memory 20 may be configured to store software programs or modules. The processor 80 is configured to execute various functional applications and data processes of the mobile phone by running the software programs and modules stored in the memory 20. The memory 20 may mainly include a program storage region and a data storage region. The program storage region may store an operation system, at least one function required application and the like. The data storage region may store data produced by using the mobile phone and the like. In addition, the memory 20 may include a high speed random access memory and may include a non-volatility memory, such as at least one disk memory, a flash memory, or other volatility solid state memory.

The input unit 30 may be configured to receive figure or character information inputted and generate a key signal input related to a user setup or function control of the mobile phone. In detail, the input unit 30 may include a fingerprint identification module and other input devices. The fingerprint identification module may collect fingerprint data of the user using the mobile phone. The other input devices may include but are not limited to one or more of a touch screen, a physical keyboard, a functional key (such as a volume control key, a switch key and the like), a trackball, a mouse and a joystick.

The display unit 40 may be configured to display information inputted by the user or information provided to the user or various menus of the mobile phone. The display unit 40 may include a display screen 41. Alternatively, the display screen 41 may be configured as a liquid crystal display (LCD), an organic light-emitting diode (OLED) and the like.

The mobile phone may further include at least one sensor 50, such as an optical sensor, a motion sensor and other sensors. In detail, the optical sensor may include a surrounding light sensor and a proximity sensor. The surrounding light sensor may adjust a brightness of the display screen 41 according to surrounding lights. The proximity sensor may close the display screen 41 and/or backlight when the mobile phone moves near an ear of the user. As one of the motion sensors, an acceleration sensor (generally, a three-axis acceleration sensor), for measuring the acceleration value in various directions via the acceleration sensor, measuring a value and a direction of gravity when the phone is static, and identifying a state of the mobile phone (such as landscape screen and portrait screen switching, related games and pose calibration of a magnetometer), shake related functions (such as a pedometer, a knocking) and the like. Furthermore, the mobile phone may be configured with a gyroscope, a barometer, a hygrometer, a thermometer, an infrared sensor and other sensors.

The audio circuit 60, a loudspeaker 61 and a microphone 62 may provide an audio interface between the user and the phone. The audio circuit 60 may transmit an electrical signal converted from the audio data received to the loudspeaker 61. The loudspeaker 61 converts the electrical signal to a sound signal and play the sound signal. In another aspect, the microphone 62 may convert gathered sound singles to electrical signals. The audio circuit 60 receives and converts the electrical signals to audio data and plays the audio data to the processor 80 to be processed. The audio data processed by the processor 80 may be transmitted to another mobile phone via the RF circuit 10 or may be stored in the memory 20 to be subsequently processed.

Wi-Fi is a short distance wireless communication technology. The mobile phone may help the user to receive or send an e-mail, search webpages, access to stream medium via the Wi-Fi module 70. The Wi-Fi module 70 provides a wireless broadband Internet access. Although the Wi-Fi module 70 is illustrated in FIG. 8, it may be understood that, the Wi-Fi module 70 is not necessary for the mobile phone, thus it may be omitted according to demands without changing an essential scope of the present disclosure.

The processor 80 is a control center of the phone, which utilizes various interfaces and wires to connect various parts of the phone. By running or executing the software program and/or modules stored in the memory 20, and by invoking data stored in the memory 20, the various functions and data processing functions may be executed, thus integrally monitoring the mobile phone. Alternatively, the processor 80 may include one or more processing units. Preferably, the processor 80 may be integrated with an application processor or a modem processor. The application processor mainly processes the operation system, a user interface and an application. The modem processor mainly processes wireless communication. It may be understood that, the above modem controller may be not integrated in the processor 80.

The mobile phone may further include the power supply 90 (such as a battery) for providing power to various parts of the mobile phone. Alternatively, the power supply may be logically connected to a power management system and the processor 80, thereby managing a charging, discharging and power consumption via the power management system.

Although not shown, the mobile phone may further include a camera, a Bluetooth module, and the like, and details will not be described herein again.

In the foregoing embodiments illustrated in FIG. 1 and FIG. 5, the flow of the terminal device in each method may be implemented according to the structure of the mobile phone.

In the foregoing embodiment illustrated in FIG. 7, functions of each unit may be implemented according to the structure of the mobile phone.

An embodiment of the present disclosure also provides a computer storage medium. The computer storage medium stores a computer program for electronic data exchange, and the computer program causes a computer to execute a part or all of the steps of any method as described in the foregoing method embodiments. The computer includes the terminal device.

An embodiment of the present disclosure also provides a computer program product. The computer program product includes a non-transitory computer readable storage medium storing a computer program. The computer program is operable to cause a computer to execute a part or all of the steps of any method as described in the foregoing method embodiments. The computer program product may be a software setup package, and the computer includes the terminal device.

The method or algorithm steps described in the embodiments of the present disclosure may be implemented in a hardware manner, or may be implemented in a manner that a processor executes software instructions. Software instructions can be composed of corresponding software modules, which can be stored in a random access memory (RAM), a flash memory, a read only memory (ROM), an erasable programmable read-only memory (EPROM), an electrically erasable programmable read-only memory (EPROM), a register, a hard drive, a portable hard drive, a CD-ROM, or any other form of storage medium known in the art. An exemplary storage medium is coupled to the processor such that the processor can read information from, and write information to, the storage medium. Of course, the storage medium may also be an integral part of the processor. The processor and the storage medium may reside in an application specific integrated circuit (ASIC). In addition, the ASIC may be located in an access network device, a target network device, or a core network device. Of course, the processor and the storage medium may also exist as discrete components in the access network device, the target network device, or the core network device.

Those skilled in the art may realize that in one or more of the above embodiments, it is possible to implement the functions described by the embodiments fully or partially by software, hardware, firmware or any other combination. When implemented by software, it is possible to implement the embodiments fully or partially in a form of computer program products. The computer program product includes one or more computer instructions. When the computer program instructions are loaded and executed by the computer, procedures or functions according to embodiments of the present disclosure are fully or partially generated. The computer may be a general-purpose computer, a special-purpose computer, a computer network, or any other programmable device. The computer instructions may be stored in a computer readable storage medium, or may be transmitted from one computer readable storage medium to another computer readable storage medium. For example, the computer instructions may be transmitted from one website, computer, server or data center to another website, computer, server or data center in a wired manner (for example, via coaxial cables, fiber optics, or DSL (digital subscriber line)) or in a wireless manner (for example, via infrared, WiFi or microwave). The computer readable storage medium may be any available medium that are accessible by the computer, or a data storage device such as a server or a data center integrated with one or more available medium. The available medium may be magnetic medium (for example, floppy disk, hard disk and tape), optical medium (for example, DVD (digital video disc)), or semiconductor medium (for example, SSD (solid state disk)).

The specific implementation manners described above further describe the objectives, technical solutions and beneficial effects of the embodiments of the present disclosure in detail. It should be understood that the foregoing implementation manners are only specific implementation manners of the embodiments of the present disclosure, and are not used for limiting the protection scope of the embodiments of the present disclosure. Any modification, equivalent replacement, or improvement made on the basis of the technical solutions of the embodiments of the present disclosure shall be included in the protection scope of the embodiments of the present disclosure.

## Claims

1. A method for recommending a search word, comprising:
obtaining N search words, N being a positive integer;
determining application types corresponding respectively to the N search words, each application type corresponding to a recommendation box; and
displaying a search word i in a recommendation box corresponding to the application type corresponding to the search word i, the search word i being one of the N search words.

2. The method of claim 1, after displaying the search word i in the recommendation box corresponding to the application type corresponding to the search word i, further comprising:
when a time period during which the search word i is displayed in the recommendation box is longer than a preset time duration, updating the search word displayed in the recommendation box corresponding to the application type corresponding to the search word i.

3. The method of claim 2, further comprising:
when a click operation directed against the search word i is detected within the preset time duration, updating the search word displayed in the recommendation box corresponding to the application type corresponding to the search word i.

4. The method of any one of claims 1 to 3, wherein obtaining the N search words comprises:
obtaining K search words searched by M users currently, M being a positive integer and K being greater than or equal to M; and
selecting the N search words from the K search words, K being greater than N.

5. The method of any one of claims 1 to 3, wherein obtaining the N search words comprises:
obtaining Z search words of users within a target time period; and
selecting, from the Z search words, the N search words each being searched by the users more than or equal to a target number of times and being lately searched at a time point having a time difference from a current system time less than a target time duration, Z being greater than N, and a termination time point of the target time period being the current system time.

6. The method of any one of claims 1 to 5, after displaying the search word i in the recommendation box corresponding to the application type corresponding to the search word i, further comprising:
highlighting the recommendation box; or highlighting at least one search word displayed in the recommendation box.

7. The method of claim 6, wherein highlighting the recommendation box comprises at least one of:
displaying an indication mark next to the recommendation box, the indication mark pointing to the recommendation box;
rendering a border of the recommendation box in boldface, or displaying the border of the recommendation box in a color different from a color of a border of a search box; and
displaying an animation on the recommendation box.

8. The method of claim 6, wherein highlighting at least one search word displayed in the recommendation box comprises at least one of:
rendering the at least one search word displayed in the recommendation box in boldface;
displaying the at least one search word displayed in the recommendation box in a font different from fonts of words outside the recommendation box; and
displaying the at least one search word displayed in the recommendation box in a color different colors of words outside the recommendation box.

9. The method of any one of claims 1 to 8, wherein determining the application types corresponding respectively to the N search words comprises:
determining the application types corresponding respectively to the N search words based on a mapping relationship between search words and application types.

10. A terminal device, comprising:
an obtaining unit, configured to obtain N search words, N being a positive integer;
a determining unit, configured to determine application types corresponding respectively to the N search words, each application type corresponding to a recommendation box; and
a displaying unit, configured to display a search word i in a recommendation box corresponding to the application type corresponding to the search word i, the search word i being one of the N search words.

11. The terminal device of claim 10, further comprising:
an updating unit, configured to, when a time period during which the search word i is displayed in the recommendation box is longer than a preset time duration, update the search word displayed in the recommendation box corresponding to the application type corresponding to the search word i.

12. The terminal device of claim 11, wherein
the updating unit is further configured to, when a click operation directed against the search word i is detected within the preset time duration, update the search word displayed in the recommendation box corresponding to the application type corresponding to the search word i.

13. The terminal device of any one of claims 10 to 12, wherein the obtaining unit is configured to:
obtain K search words searched by M users currently, M being a positive integer and K being greater than or equal to M; and
select the N search words from the K search words, K being greater than N.

14. The terminal device of any one of claims 10 to 12, wherein the obtaining unit is configured to:
obtain Z search words of users within a target time period; and
select, from the Z search words, the N search words each being searched by the users more than or equal to a target number of times and being lately searched at a time point having a time difference from a current system time less than a target time duration, Z being greater than N, and a termination time point of the target time period being the current system time.

15. The terminal device of any one of claims 10 to 14, wherein,
the displaying unit is further configured to highlight the recommendation box; or to highlight at least one search word displayed in the recommendation box.

16. The terminal device of claim 15, wherein highlighting the recommendation box comprises at least one of:
displaying an indication mark next to the recommendation box, the indication mark pointing to the recommendation box;
rendering a border of the recommendation box in boldface, or displaying the border of the recommendation box in a color different from a color of a border of a search box; and
displaying an animation on the recommendation box.

17. The terminal device of claim 15, wherein highlighting at least one search word displayed in the recommendation box comprises at least one of:
rendering the at least one search word displayed in the recommendation box in boldface;
displaying the at least one search word displayed in the recommendation box in a font different from fonts of words outside the recommendation box; and
displaying the at least one search word displayed in the recommendation box in a color different colors of words outside the recommendation box.

18. The terminal device of any one of claims 10 to 17, wherein the determinng unit is configured to:
determine the application types corresponding respectively to the N search words based on a mapping relationship between search words and application types.

19. A terminal device, comprising one or more processors, one or more memories, one or more transceivers, and one or more programs, wherein the one or more programs are stored in the one or more memories and are configured to be executed by the one or more processors, and the one or more programs comprise instructions for performing steps in the method according to any one of claims 1 to 9.

20. A computer readable storage medium, storing a computer program for electronic data exchange, wherein the computer program causes a computer to execute the method according to any one of claims 1 to 9.
